# EUROPEAN PATENT SPECIFICATION

(11) **EP 4 566 858 B1**
(45) Date of publication and mention of the grant of the patent: **11.11.2026**
(21) Application number: 24217037.1
(22) Date of filing: 03.12.2024
(51) Int. Cl.: B60J 7/20, B60J 7/057, B60J 7/14

(54) **CONVERTIBLE MOTOR VEHICLE AND METHOD FOR CONTROLLING A FOLDABLE ROOF OF A CONVERTIBLE MOTOR VEHICLE**
CABRIOLET-KRAFTFAHRZEUG UND VERFAHREN ZUM STEUERN EINES KLAPPVERDECKS EINES CABRIOLET-KRAFTFAHRZEUGS
VÉHICULE AUTOMOBILE CONVERTIBLE ET PROCÉDÉ DE COMMANDE D'UN TOIT PLIABLE D'UN VÉHICULE AUTOMOBILE CONVERTIBLE

(30) Priority: 05.12.2023 IT 202300025968
(43) Date of publication of application: 11.06.2025
(73) Proprietor: FERRARI S.p.A., 41100 Modena (IT)
(72) Inventor: SELMI, Simone, 41100 MODENA (IT); SALVADOR, Manuel, 41100 MODENA (IT)
(74) Representative: Studio Torta S.p.A.

(56) References cited:
- DE-A1- 102015 209 664
- DE-U1- 29 814 310

## Description

### CROSS-REFERENCE TO RELATED APPLICATIONS

This patent application claims priority from Italian patent application no. 102023000025968 filed on December 5, 2023.

### TECHNICAL FIELD

The invention relates to a convertible motor vehicle and a method for controlling a foldable roof of a convertible motor vehicle.

### BACKGROUND

Convertible motor vehicles are known comprising:
- a frame defining a cabin adapted to accommodate the driver and possible passengers;
- a plurality of wheels rotatable relative to the frame; and
- a stowage compartment obtained at the back of the cabin along a forward direction of the motor vehicle.

Such convertible motor vehicles further comprise:
- a roof movable relative to the frame and adapted to selectively cover the cabin at a top thereof opposite to the wheels along a vertical direction of the motor vehicle; and
- a drive unit adapted to move the roof between an opening position, in which the roof is housed folded inside the stowage compartment and the cabin is uncovered and fluidly communicating with the outside of the motor vehicle, and a closing position, in which the roof extends outside the stowage compartment and covers the cabin.

In such convertible motor vehicles, it has been observed that arranging the folded roof in wet or humid conditions - for example, following the fall of rain or the washing of the motor vehicle - inside the stowage compartment, there is a risk of permanently damaging the foldable material of the roof. Specifically, if the roof is put back wet in the stowage compartment to its complete drying, the folds due to the folding of the roof tend to be imprinted in the foldable material, remaining visible also when the roof is extended outside the stowage compartment. This phenomenon is known in the field as "ironing effect".

The visible folds of the roof not only invalidate the quality of the roof from the aesthetic point of view, but are also relevant from the structural point of view, since they determine a permanent alteration of the elastic characteristics of the foldable material, significantly reducing the useful life of the roof.

In light of the above, the need is felt to reduce the risk of the formation of permanent folds in the movable roof of the convertible motor vehicles.

An object of the invention is to satisfy the need set forth above, preferably in a simple and cost-effective manner.

DE102015209664A1 teaches to use at least one sensor device to detect the temperature and/or the moisture of the vehicle roof for the purpose of forming a characteristic value. If the characteristic value exceeds a predetermined threshold, a warning signal is issued.

### DESCRIPTION OF THE INVENTION

The object is achieved by a motor vehicle as defined in claim 1. The object is also achieved by a control method as defined in claim 5. The dependent claims define particular embodiments of the invention.

### BRIEF DESCRIPTION OF THE DRAWINGS

In the following, an embodiment of the invention is described for a better understanding thereof, by way of nonlimiting example and with reference to the accompanying drawings, wherein:
- Figure 1 is a schematic top representation of a motor vehicle according to the present invention with parts removed for clarity;
- Figures 2 to 5 are schematic perspective views, with parts removed for clarity, of a portion of the motor vehicle of Figure 1 in four respective different operating positions; and
- Figure 6 is a schematic view of a portion of the motor vehicle of Figures 1 to 5.

### EMBODIMENTS OF THE INVENTION

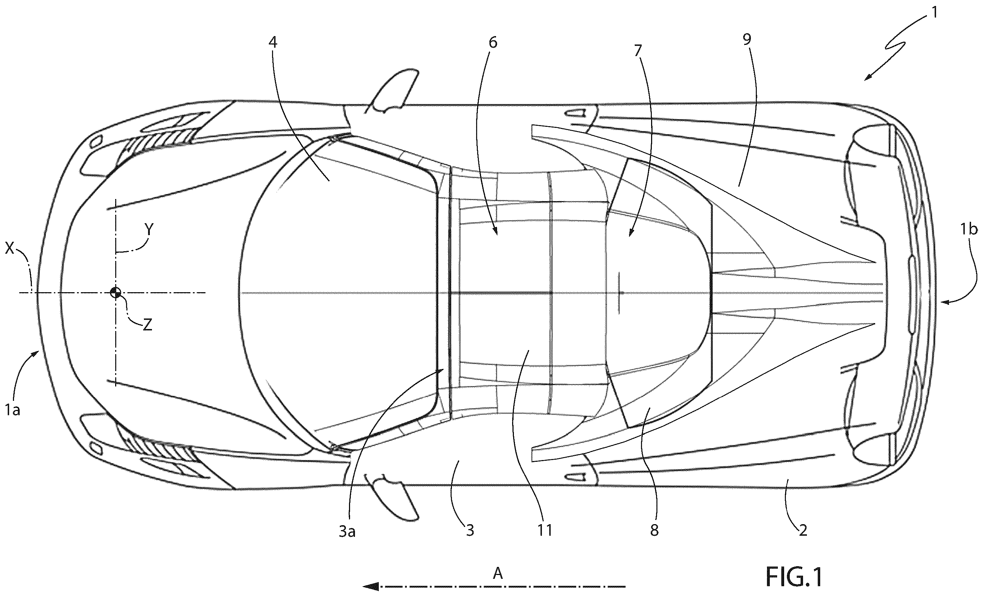

In Figure 1, reference numeral 1 is used to indicate, as a whole, a convertible motor vehicle. Preferably and without this involving any loss of generality, the motor vehicle 1 is a cabriolet or spider car, for example of sports type.

The motor vehicle 1 comprises a frame 2 defining a cabin 3 adapted to accommodate at least a driver and possibly one or more passengers and a plurality of wheels - not illustrated - rotatable relative to the frame 2 about respective rotational axes.

The motor vehicle 1 further defines a longitudinal direction X, a direction Z, which is orthogonal to the longitudinal direction X and is vertically directed to the ground on which the wheels rest, and a direction Y which is orthogonal to the longitudinal direction X and to the direction Z.

The motor vehicle 1 also comprises a front portion 1a and a rear portion 1b relative to a forward direction A. In detail, the forward direction A is oriented in the sense directed from the rear portion 1b to the front portion 1a (Figure 1).

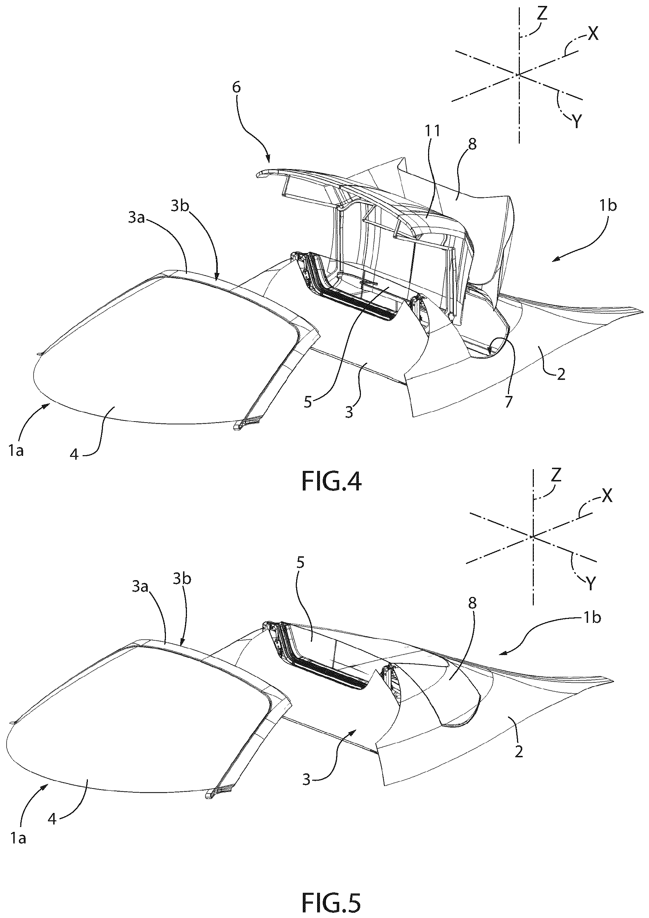

The cabin 3 comprises a top 3a on the side opposite the wheels along the direction Z. The top 3a defines an opening 3b through which the cabin 3 fluidly communicates with the outside of the motor vehicle 1 (Figures 4 and 5).

The motor vehicle 1 further comprises:
- a foldable roof 6 movable relative to the frame 2 and adapted to selectively cover the cabin 3 at the top 3a; and
- a stowage compartment 7 adapted to contain the foldable roof 6 in at least some operating positions thereof.

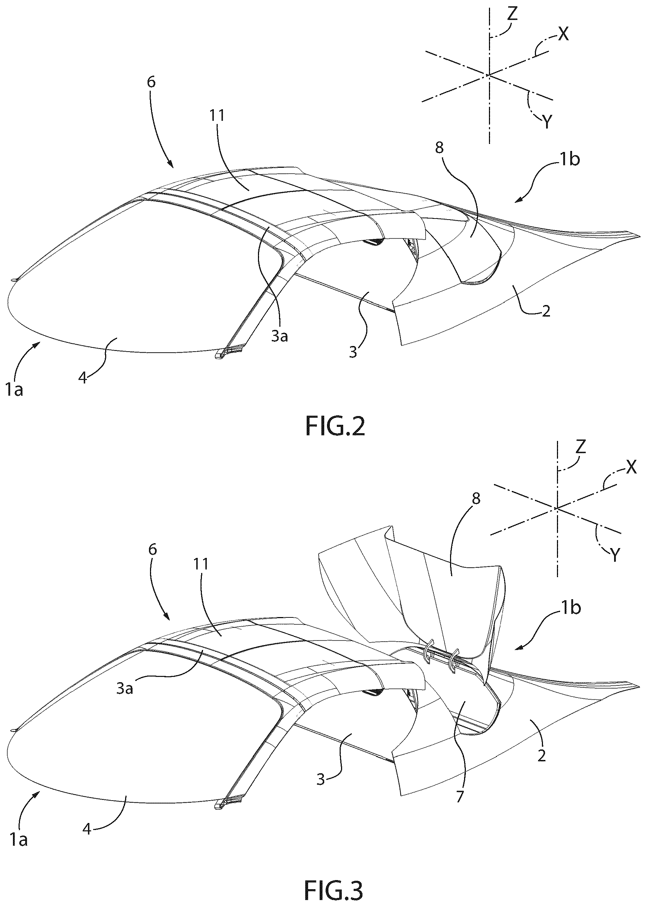

As is illustrated in Figures 2 to 5, the foldable roof 6 is movable between an opening position, in which it is housed folded inside the stowage compartment 7 and the cabin 3 is fluidly communicating with the outside of the motor vehicle 1 (Figure 5), and a closing position, in which the foldable roof 6 extends outside the stowage compartment 7 and covers the cabin 3 (Figure 2). In detail, the roof 6 comprises a cover 11, for example made of a deformable fabric. In further detail, when the foldable roof 6 is in the closing position, the cover 11 obstructs the opening 3b and delimits the cabin 3 at the top (Figures 1 and 2).

The stowage compartment 7 is interposed between the cabin 3 and the rear portion 1b.

In the shown embodiment, the motor vehicle 1 also comprises a lid 8 coupled in a movable manner to the frame 2 and adapted to selectively close the stowage compartment 7. In detail, the lid 8 is adapted to move between a closing position (Figures 2 and 5) and an opening position (Figures 3 and 4) of the stowage compartment 7. According to an embodiment not illustrated, the motor vehicle 1 does not comprise the lid 8 and the stowage compartment 7 is constantly fluidly communicating with the outside of the motor vehicle 1.

In the shown embodiment, the motor vehicle 1 further comprises a front windscreen 4 on the side of the front portion 1a and a rear window 5 on the side of the rear portion 1b. In detail, the front windscreen 4 and the rear window 5 are integral with the frame 2. Furthermore, the cabin 3 is delimited at the front by the front windscreen 4 and at the back by the rear window 5.

According to an embodiment not illustrated, the motor vehicle 1 comprises the front windscreen 4 and the rear window 5 is integrated in the foldable roof 6 and is therefore movable relative to the frame 2.

The motor vehicle 1 further comprises a luggage compartment 9 arranged at the rear portion 1b. Preferably, the stowage compartment 7 and the luggage compartment 9 communicate with each other.

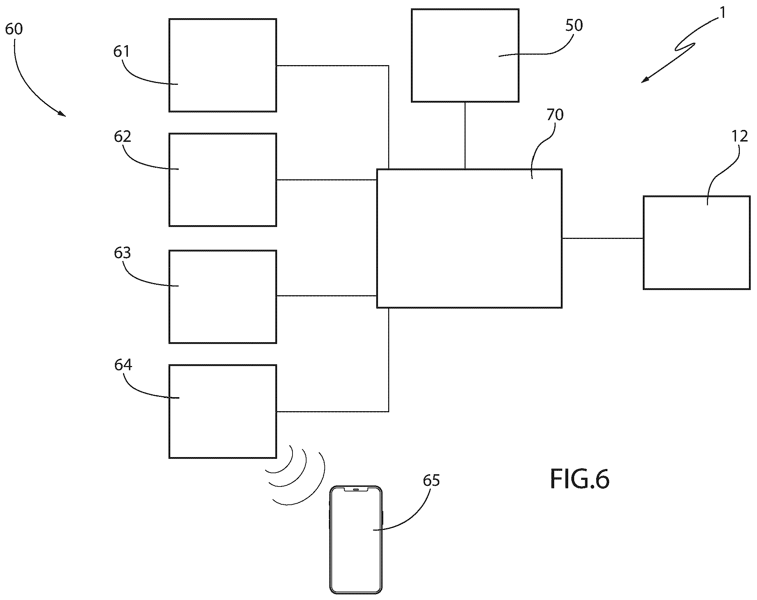

Advantageously, the motor vehicle 1 further comprises (Figure 6):
- a sensory system 50 adapted to detect a quantity u associated with the humidity of the air inside the stowage compartment 7;
- signalling means 60 adapted to signal a potential risk of damage to the foldable roof 6; and
- an electronic control unit 70 operatively connected to the sensory system 50 and the signalling means 60;
the electronic control unit 70 is programmed to compare the quantity u detected by the sensory system 50 with a threshold value uθ and to command the signalling means 60 to signal the potential risk of damage to the foldable roof 6, when the detected quantity u is greater than the threshold value uθ, so as to induce a user of the motor vehicle 1 to cause the foldable roof 6 to be moved to the closing position. For example, the user is the driver or a passenger of the motor vehicle 1.

In detail, the sensory system 50 comprises one or more humidity sensors. In further detail, such humidity sensors are arranged inside the stowage compartment 7.

The quantity u is, for example, the relative humidity or the absolute humidity or the specific humidity inside the stowage compartment 7.

The motor vehicle 1 also comprises a drive unit 12 adapted to automatically move the foldable roof 6 between the opening position and the closing position and operatively connected to the electronic control unit 70 (Figure 6).

The drive unit 12 is known per se and is not described in detail in the following. By way of example, the drive unit 12 comprises an electric drive or a hydraulic drive.

The control unit 70 is programmed to command the sensory system 50 to detect the quantity u after a given time interval from the moment in which the drive unit 12 has moved the foldable roof 6 from the closing position to the opening position. This causes the possible humidity released from the wet or humid foldable roof 6 inside the stowage compartment 7 to be sufficient for being detectable by the sensory system 50.

For example, the time interval is equal to 30 seconds, or is greater than 30 seconds. Alternatively, the electronic control unit 70 is programmed to command the sensory system 50 to detect the quantity u as soon as the foldable roof 6 has reached the opening position.

Alternatively or additionally, the control unit 70 is programmed to command the sensory system 50 to periodically detect the quantity u when the foldable roof 6 is in the opening position. For example, the control unit 70 is programmed to command the detection of the quantity u at intervals of 30 seconds.

According to an embodiment of the present invention, the electronic control unit 70 is programmed to store a predetermined threshold value uθ, for example in a step of designing or calibrating the motor vehicle 1.

According to an alternative embodiment of the present invention, the control unit 70 is programmed to command the sensory system 50 to detect and/or determine the threshold value uθ. In particular, the threshold value uθ is the value of the quantity u when said foldable roof 6 is in the closing position or is moved from the closing position towards the opening position. In other words, according to such alternative embodiment, the detected quantity u is compared with a threshold value uθ determined each time the foldable roof 6 is moved towards the opening position and associated with the humidity existing in the stowage compartment 7 before placing the foldable roof 6 back in the stowage compartment 7.

Preferably, the control unit 70 is programmed to command the sensory system 50 to detect and/or determine the threshold value uθ at the same instant in which the control unit 70 commands the drive unit 12 to move the foldable roof 6 from the closing position to the opening position.

The signalling means 60 comprise at least one of an indicator light 61, a sound emitter 62, a control panel 63 and a transceiver 64 (Figure 6).

In detail, the indicator light 61 is adapted to emit a light signal for signalling to a user of the motor vehicle 1 the risk of damage to the foldable roof 6. For example, the indicator light 61 is arranged in the cabin 3 and/or is visible from the cabin 3.

The sound emitter 62 is adapted to emit a sound signal for signalling to a user of the motor vehicle 1 the risk of damage to the foldable roof 6, for example, so that such sound signal is audible inside the cabin 3.

The control panel 63 is for example an infotainment system arranged in the cabin 3.

The transceiver 64 is adapted to be remotely operatively connected to a mobile device 65, for example, a smartphone or a tablet. In detail, the transceiver 64 is adapted to send a signal to said mobile device 65 for signalling to a user of the mobile device 65 the risk of damage to the foldable roof 6.

In the following, the operation of the motor vehicle 1 is described.

In use, a user of the motor vehicle 1 commands the automatic movement of the foldable roof 6 between the opening position and the closing position by means of the drive unit 12.

During the operation, the sensory system 50 detects the value of the quantity u inside the stowage compartment 7 and the control unit 70 compares such detected value of the quantity u with the threshold value uθ. If the detected quantity u is greater than the threshold value uθ, it is likely that the foldable roof 6 is humid or wet. Consequently, the control unit 70 commands the signalling means 60 to signal the potential risk of damage to the foldable roof 6. In this manner, the user of the motor vehicle 1 is induced to move the foldable roof 6 to the closing position or to command the movement of the foldable roof 6 to the closing position by means of the drive unit 12, allowing its correct drying outside the stowage compartment 7.

In detail, the sensory system 50 detects the quantity u after a given time interval from the conclusion of the movement of the foldable roof 6 to the opening position. Alternatively or additionally, the sensory system 50 periodically detects the value of the quantity u in the stowage compartment 7 when the foldable roof 6 is in the opening position.

Additionally, the threshold value uθ is predetermined *ab initio* and stored in the electronic control unit 70, or is detected and/or determined in real time by the sensory system 50 at each movement of the foldable roof 6 towards the opening position. In detail, the control unit 70 commands the sensory system 50 to detect the value of the quantity u when the foldable roof 6 is in the closing position or is moved from the closing position towards the opening position (for example, following a command of a user of the motor vehicle 1) and utilises such detected value as threshold value uθ for the following comparison.

Based on the foregoing, the advantages of the motor vehicle 1 and of the control method according to the invention are evident.

In particular, since the electronic control unit 70 is programmed to compare the quantity u detected by the sensory system 50 with the threshold value uθ and to command the signalling means 60 to signal the risk of damage to the foldable roof 6 when the detected quantity u is greater than the threshold value uθ, the risk of the formation of the permanent folds in the foldable roof 6 is significantly reduced. In fact, the user of the motor vehicle 1, once informed of the risk, will be induced to command the movement of the foldable roof 6 to the closing position, allowing a correct drying thereof outside the stowage compartment 7.

Since the detection of the quantity u occurs after a given time interval from the moment in which the drive unit 12 has moved the foldable roof 6 from the closing position to the opening position, it is possible to improve the efficiency with which the possible humidity formed inside the stowage compartment 7 can be detected.

Since the control unit 70 is programmed to command the sensory system 50 to periodically detect the quantity u when the foldable roof 6 is in the opening position, it is possible to control with a high level of reliability the presence of humidity or an increase in the same in the stowage compartment 7.

Since the detected quantity u is compared with a threshold value uθ determined each time and associated with the humidity existing in the stowage compartment 7 before the placing of the foldable roof 6 back in the stowage compartment 7, the possible formation of humidity in the stowage compartment 7 is determined based on a threshold value updated over time, which can also keep into account atmospheric humidity variations outside the motor vehicle 1.

Finally, it is clear that modifications and variations can be made to the motor vehicle 1 and to the control method according to the invention, which do not anyway depart from the scope of protection defined by the claims.

## Claims

1. Motor vehicle (1) comprising:
- a frame (2) defining a cabin (3) adapted to accommodate at least a driver of said motor vehicle;
- a plurality of wheels rotatable relative to said frame (2) about respective rotational axes;
- a foldable roof (6) movable relative to said frame (2) and adapted to selectively cover, in use, said cabin (3) at a top (3a) thereof opposite to said wheels along a direction (Z) vertical, in use; and
- a stowage compartment (7) adapted to contain, in use, said foldable roof (6);
said foldable roof (6) being movable between an opening position, wherein it is housed folded inside said stowage compartment (7) and said cabin (3) is fluidly communicating with the outside of said motor vehicle (1), and a closing position, wherein said foldable roof (6) extends outside said stowage compartment (7) and covers said cabin (3);
said motor vehicle (1) further comprising:
- a sensory system (50) adapted to detect a quantity (u) associated with the humidity of the air inside said stowage compartment (7);
- signalling means (60) adapted to signal, in use, a potential risk of damage to said foldable roof (6);
- an electronic control unit (70) operatively connected to said sensory system (50) and said signalling means (60);
said electronic control unit (70) being configured to compare the quantity (u) detected, in use, by said sensory system (50) with a threshold value (uθ) and to command said signalling means (60) to signal said potential risk of damage to said foldable roof (6), when said quantity (u) detected, in use, is greater than said threshold value (uθ), in order for said foldable roof (6) to be moved to said closing position;
**characterized in that** said electronic control unit (70) is programmed to command said sensory system (50) to detect, in use, said threshold value (uθ);
said threshold value (uθ) being the value of said quantity (u) when said foldable roof (6) is, in use, in the closing position or when it is moved, in use, from said closing position towards said opening position.

2. **-** Motor vehicle according to claim 1, further comprising a drive unit (12) adapted to automatically move said foldable roof (6) between said opening position and said closing position;
said drive unit (12) being operatively connected to said electronic control unit (70);
said electronic control unit (70) being programmed to command said sensory system (50) to detect said quantity (u) after a time interval from the moment in which said drive unit (12) has moved, in use, said foldable roof (6) from said closing position to said opening position.

3. **-** Motor vehicle according to claim 1 or 2, wherein said electronic control unit (70) is programmed to command said sensory system (50) to periodically detect said quantity (u) when said foldable roof (6) is, in use, in said opening position.

4. **-** Motor vehicle according to any one of the foregoing claims, wherein said signalling means (60) comprise at least one of:
- an indicator light (61);
- a sound emitter (62);
- a control panel (63); and
- a transceiver (64) adapted to be remotely operatively connected to a mobile device (65).

5. **-** Method of controlling a foldable roof (6) of a motor vehicle (1); said motor vehicle (1) comprising:
- a frame (2) defining a cabin (3) adapted to accommodate at least a driver of said motor vehicle (1);
- a plurality of wheels rotatable relative to said frame (2) about respective rotational axes;
- said foldable roof (6) movable relative to said frame (3) and adapted a selectively cover, in use, said cabin (3) at a top (3a) thereof opposite to said wheels along a direction (Z) vertical, in use; and
- a stowage compartment (7) adapted to contain, in use, said foldable roof (6);
said foldable roof (6) being movable between an opening position, wherein it is housed folded inside said stowage compartment (7) and said cabin (3) is fluidly communicating with the outside of said motor vehicle (1), and a closing position, wherein said foldable roof (6) extends outside said stowage compartment (7) and covers said cabin (3);
said method comprising the steps of:
i) detecting a quantity (u) associated with the humidity of the air inside said stowage compartment (7) by means of a sensory system (50) of said motor vehicle (1);
ii) comparing the quantity (u) detected during said step i) by said sensory system (50) with a threshold value (uθ) by means of an electronic control unit (70) of said motor vehicle (1); said electronic control unit (70) being operatively connected to said sensory system (50); and
iii) commanding signalling means (60) of said motor vehicle (1) by means of said electronic control unit (70) to signal a potential risk of damage to said foldable roof (6) when at the end of said step ii) said detected quantity (u) is greater than said threshold value (uθ), in order for said foldable roof (6) to be moved to said closing position;
said electronic control unit (70) being operatively connected to said signalling means (60);
said method being **characterized in that** it comprises the further step iv) of detecting said threshold value (uθ) by means of said sensory system (50);
said threshold value (uθ) being the value of said quantity (u) when said foldable roof (6) is in the closing position or is moved from said closing position towards said opening position.

6. **-** Method according to claim 5, wherein said step i) is commanded by said electronic control unit (70) after a time interval from the moment in which a drive unit (12) of said motor vehicle (1) has moved said foldable roof (6) from said closing position to said opening position.

7. **-** Method according to claim 5 or 6, wherein said step i) is periodically commanded by said electronic control unit (70) while said foldable roof (6) is in said opening position.

## Patentansprüche

1. Kraftfahrzeug (1), umfassend:
- einen Rahmen (2), der eine Kabine (3) bildet, die dazu ausgelegt ist, mindestens einen Fahrer des Kraftfahrzeugs aufzunehmen;
- eine Vielzahl von Rädern, die relativ zu dem Rahmen (2) um jeweilige Drehachsen drehbar sind;
- ein Faltdach (6), das relativ zu dem Rahmen (2) bewegbar ist und dazu ausgelegt ist, die Kabine (3) im Betrieb an einer den Rädern gegenüberliegenden Oberseite (3a) entlang einer im Betrieb vertikalen Richtung (Z) wahlweise abzudecken; und
- ein Staufach (7), das dazu ausgelegt ist, im Betrieb das Faltdach (6) aufzunehmen;
wobei das Faltdach (6) zwischen einer Öffnungsstellung, in der es zusammengefaltet im Staufach (7) untergebracht ist und die Kabine (3) mit der Außenseite des Kraftfahrzeugs (1) in Fluidverbindung steht, und einer Schließstellung bewegbar ist, in der sich das Faltdach (6) aus dem Staufach (7) heraus erstreckt und die Kabine (3) abdeckt;
wobei das Kraftfahrzeug (1) ferner Folgendes umfasst:
- ein Sensorsystem (50), das dazu ausgelegt ist, eine mit der Luftfeuchtigkeit im Inneren des Stauraums (7) verbundene Größe (u) zu erfassen;
- Signalisierungsmitteln (60), die dazu ausgelegt sind, im Betrieb ein potenzielles Risiko einer Beschädigung des Faltdachs (6) zu signalisieren;
- eine elektronische Steuereinheit (70), die funktionsmäßig mit dem Sensorsystem (50) und den Signalisierungsmitteln (60) verbunden ist;
wobei die elektronische Steuereinheit (70) so konfiguriert ist, dass sie die im Betrieb von dem Sensorsystem (50) erfasste Größe (u) mit einem Schwellenwert (uθ) vergleicht und die Signalisierungsmittel (60) anweist, das potenzielle Risiko einer Beschädigung des Faltdachs (6) zu signalisieren, wenn die im Betrieb erfasste Größe (u) größer als der Schwellenwert (uθ) ist, damit das Faltdach (6) in die Schließposition bewegt wird;
**dadurch gekennzeichnet, dass** die elektronische Steuereinheit (70) so programmiert ist, dass sie das Sensorsystem (50) anweist, im Betrieb den Schwellenwert (uθ) zu erfassen;
wobei der Schwellenwert (uθ) der Wert der Größe (u) ist, wenn sich das Faltdach (6) im Betrieb in der Schließposition befindet oder wenn es im Betrieb aus der Schließposition in die Öffnungsposition bewegt wird.

2. Kraftfahrzeug nach Anspruch 1, ferner umfassend eine Antriebseinheit (12), die dazu ausgelegt ist, das Faltdach (6) automatisch zwischen der Öffnungsposition und der Schließposition zu bewegen;
wobei die Antriebseinheit (12) funktionsmäßig mit der elektronischen Steuereinheit (70) verbunden ist;
wobei die elektronische Steuereinheit (70) so programmiert ist, dass sie das Sensorsystem (50) anweist, die Größe (u) nach einem Zeitintervall ab dem Zeitpunkt zu erfassen, zu dem die Antriebseinheit (12) das Faltdach (6) im Betrieb von der Schließposition in die Öffnungsposition bewegt hat.

3. Kraftfahrzeug nach Anspruch 1 oder 2, wobei die elektronische Steuereinheit (70) so programmiert ist, dass sie das Sensorsystem (50) anweist, die Größe (u) periodisch zu erfassen, wenn sich das Faltdach (6) im Betrieb in der Öffnungsposition befindet.

4. Kraftfahrzeug nach einem der vorstehenden Ansprüche, wobei die Signalisierungsmittel (60) mindestens eines der folgenden Elemente umfassen:
- eine Kontrollleuchte (61);
- einen Akustiksignalgeber (62);
- eine Steuertafel (63); und
- einen Transceiver (64), der dafür ausgelegt ist, funktionsfähig mit einer mobilen Vorrichtung (65) verbunden zu werden

5. Verfahren zum Steuern eines Faltdachs (6) eines Kraftfahrzeugs (1), wobei das Kraftfahrzeug (1) umfasst:
- einen Rahmen (2), der eine Kabine (3) bildet, die dazu ausgelegt ist, mindestens einen Fahrer des Kraftfahrzeugs (1) aufzunehmen;
- eine Vielzahl von Rädern, die relativ zu dem Rahmen (2) um jeweilige Drehachsen drehbar sind;
- wobei das Faltdach (6) relativ zu dem Rahmen (3) bewegbar ist und dazu ausgelegt ist, die Kabine (3) im Betrieb an einer den Rädern gegenüberliegenden Oberseite (3a) entlang einer im Betrieb vertikalen Richtung (Z) wahlweise abzudecken; und
- ein Staufach (7), das dazu ausgelegt ist, im Betrieb das Faltdach (6) aufzunehmen;
wobei das Faltdach (6) zwischen einer Öffnungsstellung, in der es zusammengefaltet im Staufach (7) untergebracht ist und die Kabine (3) mit der Außenseite des Kraftfahrzeugs (1) in Fluidverbindung steht, und einer Schließstellung bewegbar ist, in der sich das Faltdach (6) aus dem Staufach (7) heraus erstreckt und die Kabine (3) abdeckt;
wobei das Verfahren die folgenden Schritte umfasst:
i) Erfassen einer Größe (u), die mit der Luftfeuchtigkeit im Inneren des Stauraums (7) verbunden ist, mittels eines Sensorsystems (50) des Kraftfahrzeugs (1);
ii) Vergleichen der in Schritt i) durch das Sensorsystem (50) erfassten Größe (u) mit einem Schwellenwert (uθ) mittels einer elektronischen Steuereinheit (70) des Kraftfahrzeugs (1); wobei die elektronische Steuereinheit (70) funktionsmäßig mit dem Sensorsystem (50) verbunden ist; und
iii) Anweisen der Signalisierungsmittel (60) des Kraftfahrzeugs (1) mittels der elektronischen Steuereinheit (70), ein potenzielles Risiko einer Beschädigung des Faltdachs (6) zu signalisieren, wenn am Ende des Schritts ii) der erfasste Wert (u) größer ist als der Schwellenwert (uθ), damit das Faltdach (6) in die Schließposition bewegt wird;
wobei die elektronische Steuereinheit (70) funktionsmäßig mit den Signalisierungsmitteln (60) verbunden ist;
wobei das Verfahren **dadurch gekennzeichnet ist, dass** es den weiteren Schritt iv) des Erfassens des Schwellenwerts (uθ) mittels des Sensorsystems (50) umfasst;
wobei der Schwellenwert (uθ) der Wert der Größe (u) ist, wenn sich das Faltdach (6) in der Schließposition befindet oder aus der Schließposition in Richtung der Öffnungsposition bewegt wird.

6. Verfahren nach Anspruch 5, wobei der Schritt i) von der elektronischen Steuereinheit (70) nach einem Zeitintervall ab dem Zeitpunkt gesteuert wird, zu dem eine Antriebseinheit (12) des Kraftfahrzeugs (1) das Faltdach (6) aus der Schließposition in die Öffnungsposition bewegt hat.

7. Verfahren nach Anspruch 5 oder 6, wobei der Schritt i) von der elektronischen Steuereinheit (70) periodisch gesteuert wird, während sich das Faltdach (6) in der Öffnungsposition befindet.

## Revendications

1. Véhicule automobile (1) comprenant :
- un châssis (2) définissant un habitacle (3) conçu pour accueillir au moins un conducteur dudit véhicule automobile ;
- une pluralité de roues rotatives par rapport audit châssis (2) autour d'axes de rotation respectifs ;
- un toit pliable (6) mobile par rapport audit châssis (2) et conçu pour sélectivement recouvrir, en utilisation, ledit habitacle (3) sur un dessus (3a) de celui-ci opposé auxdites roues le long d'une direction (Z) verticale, en utilisation ; et
- un compartiment d'escamotage (7) conçu pour contenir, en utilisation, ledit toit pliable (6) ;
ledit toit pliable (6) étant mobile entre une position d'ouverture, dans laquelle il est logé plié à l'intérieur dudit compartiment d'escamotage (7) et ledit habitacle (3) est en communication fluidique avec l'extérieur dudit véhicule automobile (1), et une position de fermeture, dans laquelle ledit toit pliable (6) s'étend à l'extérieur dudit compartiment d'escamotage (7) et recouvre ledit habitacle (3) ;
ledit véhicule automobile (1) comprenant en outre :
- un système sensoriel (50) conçu pour détecter une grandeur (u) associée à l'humidité de l'air à l'intérieur dudit compartiment d'escamotage (7) ;
- des moyens de signalisation (60) conçus pour signaler, en utilisation, un risque potentiel d'endommagement dudit toit pliable (6) ;
- une unité de commande électronique (70) connectée de manière opérationnelle audit système sensoriel (50) et auxdits moyens de signalisation (60) ;
ladite unité de commande électronique (70) étant configurée pour comparer la grandeur (u) détectée, en utilisation, par ledit système sensoriel (50) avec une valeur seuil (uθ) et pour donner consigne auxdits moyens de signalisation (60) de signaler ledit risque potentiel d'endommagement dudit toit pliable (6), lorsque ladite grandeur (u) détectée, en utilisation, est supérieure à ladite valeur seuil (uθ), afin que ledit toit pliable (6) soit déplacé jusqu'à ladite position de fermeture ;
**caractérisé en ce que** ladite unité de commande électronique (70) est programmée pour donner consigne audit système sensoriel (50) de détecter, en utilisation, ladite valeur seuil (uθ) ;
ladite valeur seuil (uθ) étant la valeur de ladite grandeur (u) lorsque ledit toit pliable (6) est, en utilisation, dans la position de fermeture ou lorsqu'il est déplacé, en utilisation, de ladite position de fermeture vers ladite position d'ouverture.

2. Véhicule automobile selon la revendication 1, comprenant en outre une unité d'entraînement (12) conçue pour déplacer automatiquement ledit toit pliable (6) entre ladite position d'ouverture et ladite position de fermeture ;
ladite unité d'entraînement (12) étant connectée de manière opérationnelle à ladite unité de commande électronique (70) ;
ladite unité de commande électronique (70) étant programmée pour donner consigne audit système sensoriel (50) de détecter ladite grandeur (u) après un intervalle de temps à partir du moment auquel ladite unité d'entraînement (12) a déplacé, en utilisation, ledit toit pliable (6) de ladite position de fermeture à ladite position d'ouverture.

3. Véhicule automobile selon la revendication 1 ou 2, dans lequel ladite unité de commande électronique (70) est programmée pour donner consigne audit système sensoriel (50) de détecter périodiquement ladite grandeur (u) lorsque ledit toit pliable (6) est, en utilisation, dans ladite position d'ouverture.

4. Véhicule automobile selon l'une quelconque des revendications précédentes, dans lequel lesdits moyens de signalisation (60) comprennent au moins l'un parmi :
- un voyant (61) ;
- un émetteur sonore (62) ;
- un panneau de commande (63) ; et
- un émetteur-récepteur (64) conçu pour être connecté à distance de manière opérationnelle à un dispositif mobile (65).

5. Procédé de commande d'un toit pliable (6) d'un véhicule automobile (1); ledit véhicule automobile (1) comprenant :
- un châssis (2) définissant un habitacle (3) conçu pour accueillir au moins un conducteur dudit véhicule automobile (1) ;
- une pluralité de roues rotatives par rapport audit châssis (2) autour d'axes de rotation respectifs ;
- ledit toit pliable (6) mobile par rapport audit châssis (3) et conçu pour sélectivement recouvrir, en utilisation, ledit habitacle (3) sur un dessus (3a) de celui-ci opposé auxdites roues le long d'une direction (Z) verticale, en utilisation ; et
- un compartiment d'escamotage (7) conçu pour contenir, en utilisation, ledit toit pliable (6) ;
ledit toit pliable (6) étant mobile entre une position d'ouverture, dans laquelle il est logé plié à l'intérieur dudit compartiment d'escamotage (7) et ledit habitacle (3) est en communication fluidique avec l'extérieur dudit véhicule automobile (1), et une position de fermeture, dans laquelle ledit toit pliable (6) s'étend à l'extérieur dudit compartiment d'escamotage (7) et recouvre ledit habitacle (3) ;
ledit procédé comprenant les étapes de :
i) la détection d'une grandeur (u) associée à l'humidité de l'air à l'intérieur dudit compartiment d'escamotage (7) au moyen d'un système sensoriel (50) dudit véhicule automobile (1) ;
ii) la comparaison de la grandeur (u) détectée au cours de ladite étape i) par ledit système sensoriel (50) avec une valeur seuil (uθ) au moyen d'une unité de commande électronique (70) dudit véhicule automobile (1) ; ladite unité de commande électronique (70) étant connectée de manière opérationnelle audit système sensoriel (50) ; et
iii) le fait de donner consigne à des moyens de signalisation (60) dudit véhicule automobile (1), au moyen de ladite unité de commande électronique (70), de signaler un risque potentiel d'endommagement dudit toit pliable (6) lorsque, à la fin de ladite étape ii), ladite grandeur (u) détectée est supérieure à ladite valeur seuil (uθ), afin que ledit toit pliable (6) soit déplacé jusqu'à ladite position de fermeture ;
ladite unité de commande électronique (70) étant connectée de manière opérationnelle auxdits moyens de signalisation (60) ;
ledit procédé étant **caractérisé en ce qu'**il comprend l'étape iv) supplémentaire de la détection de ladite valeur seuil (uθ) au moyen dudit système sensoriel (50) ;
ladite valeur seuil (uθ) étant la valeur de ladite grandeur (u) lorsque ledit toit pliable (6) est dans la position de fermeture ou est déplacé de ladite position de fermeture vers ladite position d'ouverture.

6. Procédé selon la revendication 5, dans lequel il est donné consigne de réaliser ladite étape i) par ladite unité de commande électronique (70) après un intervalle de temps à partir du moment auquel une unité d'entraînement (12) dudit véhicule automobile (1) a déplacé ledit toit pliable (6) de ladite position de fermeture à ladite position d'ouverture.

7. Procédé selon la revendication 5 ou 6, dans lequel il est donné consigne de réaliser périodiquement ladite étape i) par ladite unité de commande électronique (70) tandis que ledit toit pliable (6) est dans ladite position d'ouverture.
